Europäisches Patentamt

European Patent Office

Office européen des brevets

(19)

(11) Veröffentlichungsnummer: **0 010 778**
**B2**

(12) **NEUE EUROPÄISCHE PATENTSCHRIFT**

(45) Veröffentlichungstag der neuen Patentschrift:
07.11.90

(51) Int. Cl.5: **B 65 G 57/24**

(21) Anmeldenummer: **79104349.0**

(22) Anmeldetag: **06.11.79**

(54) Stapeleinrichtung.

(30) Priorität: **06.11.78 US 957758**

(43) Veröffentlichungstag der Anmeldung:
**14.05.80 Patentblatt 80/10**

(45) Bekanntmachung des Hinweises auf die
Patenterteilung:
**09.11.83 Patenblatt 83/45**

(45) Bekanntmachung des Hinweises auf die
Entscheidung u"ber den Einspruch:
**07.11.90 Patentblatt 90/45**

(84) Benannte Vertragsstaaten:
**DE FR GB IT NL**

(56) Entgegenhaltungen:
**DE-A-2 005 446**
**DE-A-2 011 458**
**DE-A-2 105 762**
**DE-A-2 424 341**
**DE-A-2 558 233**
**DE-B-2 408 797**
**DE-C-1 215 591**
**DE-C-1 931 043**
**FR-A-2 039 141**
**US-A-4 068 765**

**DIN 44030, Ausgabe März 1975**

(73) Patentinhaber: **Cor-Mac Division of Vanguard Machinery Corporation**
**816 U.S.Highway No. 1**
**Edison New Jersey (US)**

(72) Erfinder: **Pulda, William F.**
**19, Lake Park Drive**
**Piscataway N. J. 08854 (US)**

(74) Vertreter: **Lieck, Hans-Peter, Dipl.-Ing.**
**Scherzberg & Undritz Maximiliansplatz 10**
**D-8000 München 2 (DE)**

**Beschreibung**

Die Erfindung bezieht sich auf eine Stapeleinrichtung mit einer Transportplatte zum Fördern des an einer ersten Stelle aufgenommenen und in einer Lage angeordneten Stückgutes, ferner mit Mitteln zum selbsttätigen Ausrichten der Transportplatte in einer vorbestimmten Höhenlage und mit Mitteln zum Bewegen der Transportplatte über eine zweite Stelle und zum dort erfolgenden Ablegen der erwähnten Lage als Bestandteil eines aus mehreren Lagen gebildeten Stapels, wobei Lichtsteuereinheiten zum selbsttätigen Ausrichten der Transportplatte in bezug auf die jeweils in der zweiten Stelle einzunehmende Stapelhöhe in Abhängigkeit von dem an der zweiten Stelle gegebenenfalls bereits vorhandenen Stapel vorgesehen sind.

Eine derartige Stapeleinrichtung ist aus der DE—A—2 005 446 bekannt. Mit dieser Stapeleinrichtung wird von der Transportplatte aufgenommenes Stückgut jeweils in eine solche Höhenlage gebracht, daß nachfolgend das Ablegen auf einem bereits bestehenden Stapel möglich ist, wobei unabhängig von der jeweiligen Höhe des Stückguts und damit des Stapels die notwendige Höhenlage automatisch ermittelt wird. Dies geschieht mittels Lichtprojektoren, die einen Lichtstrahl diagonal zum Stapel zu einem fotoempfindlichen Empfänger werfen. Lichtprojektor und zugehörige Empfänger sind also getrennt voneinander angeordnet.

Der Erfindung liegt die Aufgabe zugrunde, die bekannte Einrichtung hinsichtlich der Anordnung der Lichtsteuereinheiten zu verbessern. Dies geschieht dadurch, daß die Lichtsteuereinheiten jeweils Paare von übereinander angeordneten, als Lichtquelle und Empfangselement ausgebildeten Lichtsteuereinheiten bilden und zwei Paare nebeneinander derart angeordnet sind, daß im Zusammenwirken mit Reflektoren die Stapelhöhe an der zweiten Stelle entweder beide Paare abdeckt bzw. freigibt oder nur das untere Paar abdeckt, so daß bei Abdeckung bzw. Freigabe die Transportplatte entsprechend vertikal verschoben und bei Abdeckung nur des unteren Paares in ihrer Höhenlage festgehalten wird.

Aufgrund der Zusammenfassung von Lichtquelle und Empfangselement zu einem ein Paar dieser Lichtsteuereinrichtungen bildenden Lichtsteuereinheit und der Anordnung von Lichtquelle und Empfangselement übereinander innerhalb des Paares ergibt sich eine eng geschlossene Ausführungsform für die Lichtsteuereinheiten mit gleichzeitiger Möglichkeit der Feststellung der notwendigen vertikalen Bewegungsrichtung der Transportplatte.

Zweckmäßig ordnet man die erste und die zweite Stelle in derselben Arbeitshöhe an, da sich auf diese Weise für das Bedienungspersonal eine gute Übersichtlichkeit ergibt.

Der Transportplatte kann man einen Abstreifer zuordnen, der quer zu der Transportplatte bewegbar ist. Der Abstreifer übernimmt so die genaue Ausrichtung des zu einer Lage zusammengefaßten Stückgutes an der ersten Stelle.

Der Abstreifer kann aus einer inneren und äußeren Planke bestehen, die die Transportplatte kreuzen.

Um zu vermeiden, daß bei einer Auf- und Abbewegung des Abstreifers dieser einen bereits bestehenden Stapel streift und diesen möglicherweise umwirft, ordnet man den Abstreifer zweckmäßig so an, daß er in der Bewegungsrichtung der Transportplatte bewegbar ist.

Nachstehend wird die Erfindung anhand von Ausführungsbeispielen unter Bezugnahme auf die Zeichnung näher erläutert. In der Zeichnung zeigt

Fig. 1 die Perspektiv-Teilansicht einer erfindungsgemäßen Stapeleinrichtung,

Fig. 2A eine Teilvorderansicht, aus der Details der Befestigung und der Betätigung des Abstreifers und der Platte der Anordnung gemäß der Linie 2A—2A in der Fig. 1 zu ersehen sind,

Fig. 2B eine Teildraufsicht der in Fig. 2A dargestellten Bestandteile gemäß der Linie 2B—2B,

Fig. 2C den zur Lichtsteuerung gehörenden elektrischen Schaltkreis der Stapeleinrichtung gemäß Fig. 1.

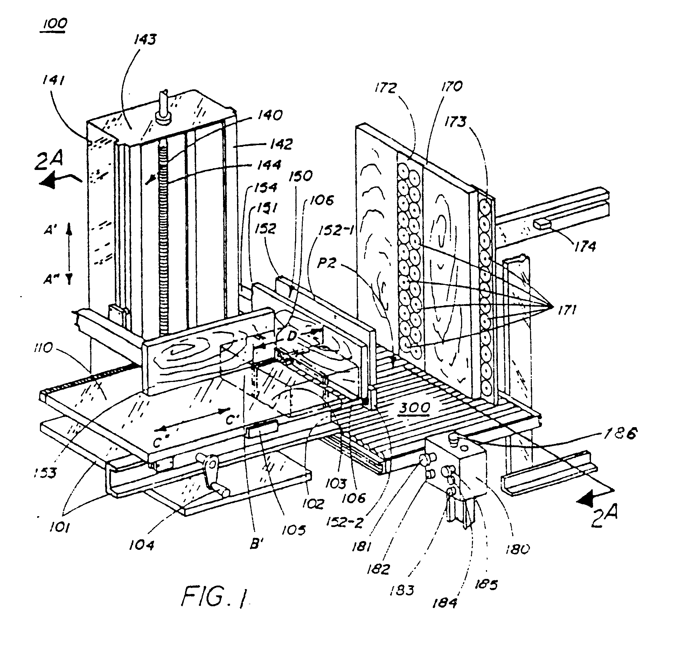

In Fig. 1 ist eine erfindungsgemäße Stapeleinrichtung 100 in der Nachbarschaft einer Fördervorrichtung 300 an einer Ladestelle P2 angeordnet dargestellt. Bei der Stapeleinrichtung 100 ist eine Transportplatte 110 gleitbar von einem Schlitten 101 getragen. Der letztere ist freitragend befestigt und in vertikaler Aufwärtsrichtung, wie durch den Pfeil A' angegeben, und in vertikaler Abwärtsrichtung, wie durch den Pfeil A'' angegeben, längs nicht dargestellter Führungsschienen eines Stapelträgers 140 bewegbar.

Der Stapelträger 140 selbst weist Seitenteile 141 und 142 sowie ein Endteil 143 auf. Im Endteil 143 und in einem gegenüberliegenden, in der Fig. 1 nicht sichtbaren Bodenteil ist eine Schraubspindel 144 drehbar befestigt. Die Schraubspindel 144 wird in üblicher Weise im Uhrzeigersinn oder im Gegenuhrzeigersinn angetrieben, beispielsweise durch einen nicht dargestellten Motor, der an einem der Seitenteile 143 oder 142 befestigt ist und über eine Kette 148 oder einen Riemen mit einem Antriebsgetriebe 146 der Schraubenspindel in Wirkverbindung steht. Die Schraubspindel 144 ist auch in einem in Fig. 1 nicht sichtbaren Ansatz des Schlittens 101 eingeschraubt, so daß bei ihrer Drehbewegung im Uhrzeigersinn oder im Gegenuhrzeigersinn dieser Schlitten nach oben oder nach unten in Richtung der Pfeile A' oder A'' bewegt wird.

Der Schlitten 101 trägt auch einen Abstreifer 150, der aus einer inneren Planke 151 und aus äußeren Planken 151—1 und 152—2 besteht. Wie noch erläutert werden wird, sind die äußeren Planken bezüglich der inneren Planke 151 zur Seite hin in festgelegten Intervallen des Stapelzyklus bewegbar. Sowohl die innere Planke 151 als auch die äußeren Planken 151—1 und 152—2 sind in der nachstehend erläuterten Art und Weise am Schlitten 101 befestigt, wobei es sich jedoch nur um eine beispielhafte Befestigungsart handelt. Zusätzlich zum Abstreifer 150 weist die Stapeleinrichtung 100 gemäß Fig. 1 eine rückwärtige, in ihrer Lage verstellbare Musterschablonenplanke 153 auf, die dazu mitausgenutzt wird, auf der Transportplatte 110 die in gestrichelten Linien dargestellte Lage B′ zu bilden.

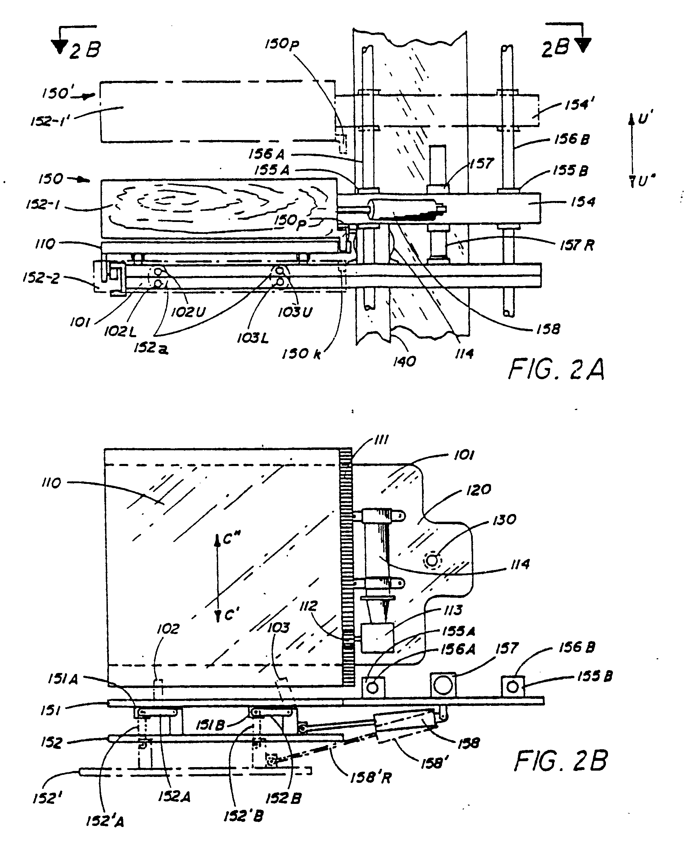

Beim Ausführungsbeispiel der Erfindung gemäß Fig. 1 wird von einer automatischen Lichtsteuerung Gebrauch gemacht. Als Beispiel ist angenommen, daß Lichtsteuerelemente 102 und 103 in der in Fig. 2A dargestellten Weise am Schlitten 101 angebracht sind. Die Lichtsteuerelemente arbeiten mit einem Anschlagstück 170 zusammen, das eine Mehrzahl von Reflektoren 171 aufweist, die in zwei vertikalen Spalten 172 und 173 angeordnet sind. Die Spalte 172 befindet sich mittig auf dem Anschlagstück und umfaßt eine Doppelreihe von Reflektoren 171. Die Spalte 173 ist am Rand des Anschlagstückes angeordnet und weist eine Einfachreihe von Reflektoren 171 auf. Der Grund, weswegen bei der mittleren Spalte 172 eine Doppelreihe von Reflektoren Verwendung findet, wird nachstehend näher erläutert. Das Anschlagstück 170 ist sowohl bezüglich der Oberfläche der Fördervorrichtung 300 an der Musterbildungsstelle als auch bezüglich der Stapeleinrichtung 100 einstellbar.

Die Steuerung der Stapeleinrichtung 100 erfolgt von einem Steuerungskasten 180 aus. Zunächst wird jedoch eine Handkurbel 104 dazu verwendet, die rückwärtige Musterschablonenplanke 153 in die gewünschte Stellung bezüglich der inneren Planke 151 des Abstreifers 150 zu bringen. In der Praxis kann die Kante der Musterschablonenplanke 153 von der Oberfläche der Transportplatte 110 um eine vorgegebene Strecke beabstandet sein.

Zweckmäßigerweise wird dann ein Mustertiefenschalter 105′ bezüglich der Hinterseite einer angenommenen Lage B′ eingestellt. Die Tiefe D der Lage B′ wird dann gemessen, woraufhin die räumliche Lage des Anschlagstückes 170 unter Verwendung der Skala 174 zusammen mit einem üblichen, nicht dargestellten Zahnstangenantrieb eingestellt wird.

Am Steuerungskasten 180 ist ein Steuerungshebel 181 angebracht, der dazu verwendet wird, von Hand bestimmte Funktionen zu veranlassen. Ein Anheben des Steuerungshebels 181 führt dazu, daß der Schlitten 101 sich in Richtung A′ bewegt. Ein Absenken des Hebels 181 hingegen bewirkt eine Bewegung des Schlittens 101 nach unten in Richtung des Pfeils A″. Wenn der Hebel 181 in der einen Richtung horizontal bewegt wird, geht der Abstreifer 150, wie in Fig. 2B gezeigt, auseinander. Die Horizontalbewegung des Hebels 181 in der anderen Richtung führt hingegen dazu, daß der Schlitten 101 in seine Ausgangsstellung zurückkehrt, die sich an einer vorgegebenen Stelle in Höhe der Bedienungsperson befindet.

Der Steuerungskasten 180 umfaßt auch einen Auswahlschalter 182, in dessen einer Stellung sich der automatische oder normale Betrieb abwickelt und in dessen anderer Stellung der Abstreifer, wie in Fig. 2A gezeigt, angehoben wird. Weiterer Bestandteil des Steuerungskastens 180 ist ein Geschwindigkeitswahlschalter 183, mit dessen Hilfe die Geschwindigkeit der Bewegung der Transportplatte 110 bei deren durch den Pfeil C′ gekennzeichneten Auswärtshub eingestellt werden kann. Der Rückwärtshub entsprechend dem Pfeil C″ wird automatisch unter allen Umständen auf einem Maximalwert gehalten. Hiermit ist der Auswärtshub für eine große Vielzahl von Lagemustern einstellbar. Weitere Bestandteile des Steuerungskastens 180 ist ein Startknopf 184, der dazu dient, die Antriebsmaschine in Gang zu setzen, sowie ein Haltknopf 185. Ein weiterer Knopf 186 dient dazu, eine zyklische Wiederholung der Lagenanordnung der Stapel festzulegen.

Nachstehend werden Einzelheiten der Betriebsweise des Abstreifers und der Transportplatte anhand der Fig. 2A bis 2C näher erläutert. Aus der schematischen Darstellung gemäß Fig. 2A sieht man, daß der Abstreifer 150 mit einem vorspringenden Element 154 verbunden ist, das seinerseits an Lagern 155A und 155B befestigt ist, die vertikale Gleitstangen 156A und 156B umfassen. Das vorspringende Element 154 gestattet es, den gesamten Abstreifer 150 längs der Gleitstangen 156A und 156B entsprechend den Pfeilen U′ und U″ nach oben und nach unten zu bewegen, wobei diese Bewegung durch einen Steuerzylinder 157 hervorgerufen wird. Das Ende des Steuerzylinders 157 ist mittels einer beweglichen Stange 157R mit dem Schlitten 101 verbunden, so daß bei Betätigung des Steuerzylinders 157 in üblicher Weise (Fluiddruck-Beeinflussung eines innen beweglichen Kolbens) der gesamte Abstreifer in Richtung der Pfeile U′ oder U″ sich nach oben oder nach unten bewegt. Die Aufwärtsbewegung des Abstreifers 150 führt dazu, daß er sich auch in Querrichtung zur Transportplatte 110 in die gestrichelt dargestellte Lage 150′ bewegt.

Es sei darauf hingewiesen, daß jede der Lichtsteuereinheiten 102L, 102V und 103L, 103V aus einer Lichtquelle und einem Empfangselement besteht, das auf von der Lichtquelle ausgehendes und von einem der Reflektoren 171 gemäß Fig. 1 reflektiertes Licht reagiert.

Fig. 2B zeigt eine Draufsicht der schematisch in Fig. 2A dargestellten Anordnung. Man erkennt daraus, daß die Transportplatte 110 mit Hilfe einer Zahnstange 111 und eines Ritzels 112 bewegbar ist. Das Ritzel wird über ein Getriebe 113 durch einen Motor 114 angetrieben, der am Schlitten 101 befestigt ist. Darüber hinaus zeigt Fig. 2B die äußeren und inneren Planken 152 und 151 des Abstreifers 150 sowie die Art und Weise, in der die äußeren Planken 152—1 und 152—2 bezüglich der inneren Planke 151 mit Hilfe einer zweiten Kolben-Zylinder-Anordnung 158 verschwenkbar sind. Wenn der Schlitten 101 sich in einer Stellung befindet, die mit Hilfe der Lichtsteuereinheiten 102 und 103 bestimmt wird, erfolgt eine Hubbewegung des Abstreifers 150 in Querbewegung bezüglich der Transportplatte 110 aufgrund der Wirkung des in Fig. 2A gezeigten Zylinders 157, woraufhin die Transportplatte unter der Wirkung des Motors 114 sich in Richtung des Pfeils C' in Fig. 2B bewegt, um dann über der Stapelstelle zu liegen.

Der nächste Schritt des Stapelzyklus besteht in einem Absenken des Abstreifers 150 aufgrund des entgegengesetzten Betriebes des Steuerzylinders 157. Die obere äußere Planke 152—1 greift dann an der unteren äußeren Planke 152—2 (gestrichelt dargestellt) an, indem ein Stift 150p in eine Ausnehmung 150k der unteren äußeren Planke 152—2 eingreift. Die beiden äußeren Planken 152—1 und 152—2 werden dann unter der Wirkung des Zylinders 158 nach außen in eine Stellung 152' geschwenkt, um die gewünschte Ausrichtung des Stapels herbeizuführen. Es sei darauf hingewiesen, daß zu diesem Zweck die untere äußere Planke 152—2 über Arme 106, wie in Fig. 1 gezeigt, drehbar mit dem Schlitten verbunden ist. Darüber hinaus weist die untere äußere Planke Öffnungen 152a für das Licht der Lichtsteuereinheiten auf. Beim nachfolgenden Arbeitsschritt wird die Transportplatte 110 aufgrund der Rückwärtsbetriebsweise des Motors 114 in Richtung des Pfeils C'' zurückbewegt. Der ordnungsgemäße Abstand zwischen der auf dem Stapel abgelegten Lage und der Kante des Stapels wird durch die Bewegung des Zylinders 158 gemäß Fig. 2B in die gestrichelt dargestellte Stellung 158' bewirkt, wodurch die obere äußere Planke in die gestrichelt dargestellte Stellung 152' gelangt und daraufhin wieder in ihre Normalstellung zurückbewegt wird. Um dies zu erreichen, ist die obere äußere Planke mittels verschwenkbarer Gelenkglieder 152A und 152B mit Ansätzen 151A und 151B verbunden. Die Stange 158R steht mit dem Gelenkglied 152B in Verbindung und bringt diese, bei Betätigung in die gestrichelt gezeichnete Stellung 152'B. Aus der Fig. 2B erkennt man auch einen Ansatz 120 des Schlittens 101, der eine mit Gewinde versehene Bohrung 130 für die Schraubspindel 144 gemäß Fig. 1 hat.

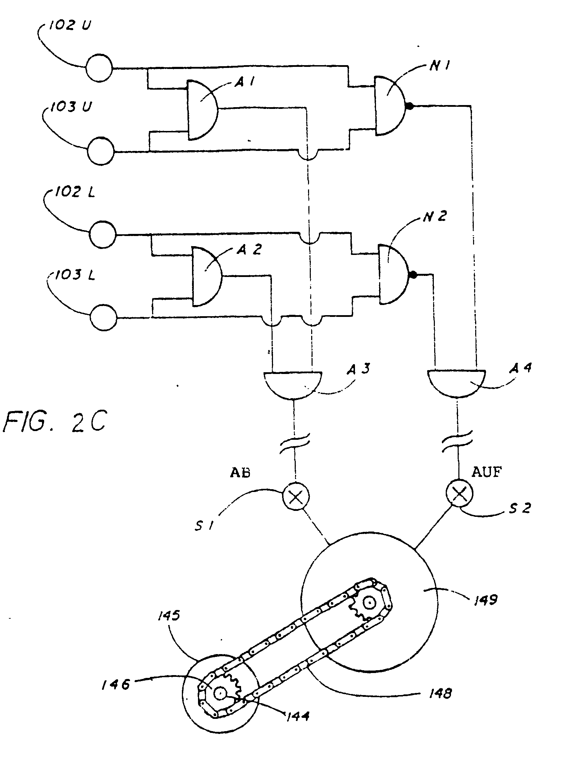

Das automatische Ausrichten des Schlittens 101 in der gewünschten Stapelhöhe erfolgt aufgrund des Zusammenwirkens der Paare von Lichtsteuereinheiten 102L, 102V und 103L, 103V mit dem in Fig. 2C dargestellten elektrischen Schaltkreis. Die oberen Lichtsteuereinheiten 102U und 103U sind mit den Eingangsanschlüssen eines AND-Gliedes A1 und eines NAND-Gliedes N1 verbunden. Die Ausgänge der AND-Glieder A1 und A2 sind mit den Eingängen eines dritten AND-Gliedes A3 verbunden. Die Ausgänge der NAND-Glieder N1 und N2 hingegen sind an die Eingänge eines vierten AND-Gliedes A4 angeschlossen.

Die Abwärtsbewegung des Schlittens 101 wird durch das Ausgangssignal des AND-Gliedes A3 über einen Schalter S1 gesteuert. Die Aufwärtsbewegung des Schlittens hingegen wird durch das Ausgangssignal des AND-Gliedes A4 über einen Schalter S2 gesteuert.

Das bedeutet, daß dann, wenn der Motor 149 (der am Stapelträger 140 gemäß Fig. 1 befestigt sein kann) über den Schalter S1 an Betriebsspannung gelegt wird, er das Getriebe 146 antreibt, das mit der Schraubspindel 144 gemäß Fig. 1, die im Lager 145 gehalten wird, in Wirkverbindung steht.

Wenn alle Empfangsorgane der Lichtsteuereinheiten Licht empfangen, das an die Reflektoren 171 gemäß Fig. 1 ausgesendet und von dort zurückreflektiert worden ist, sind die AND-Glieder A1, A2 und A3 aktiv, wogegen das AND-Glied A4 inaktiv ist, sodaß ein Signal erzeugt wird, das die Abwärtsbewegung des Schlittens bewirkt, wenn der Schalter S1 geschlossen ist. Diese Bewegung wird fortgesetzt, bis eines der Empfangsorgane kein Licht mehr empfängt. Es wird sich dabei um eines der unteren Empfangsorgane handeln, da ein solches als erstes abgedunkelte Verhältnisse antrifft, die beispielsweise dadurch hervorgerufen werden, daß es auf die obere Kante des Stapels trifft, der an der Stapelungsstelle P2 gebildet worden ist, oder indem es auf einen unteren Anschlag trifft. Im letztgenannten Fall kann der Schlitten veranlaßt werden, eine Ausgangsstellung zu suchen, die sich auf einem vorgegebenen Bedienungsniveau befindet, indem eine Umschaltung auf Aufwärtsbewegung erfolgt, die dann beendet ist, wenn beispielsweise ein magnetisch wirkendes Abschaltorgan am Stapelträger anspricht.

Wenn eines oder beide der unteren Empfangsorgane 102L oder 103L kein Licht empfangen, die beiden oberen Empfangsorgane 102U und 103U hingegen von reflektiertem Licht getroffen werden, bleibt der Schlitten in derjenigen Stellung, in der sich diese Konstellation einstellt, da wenigstens eines der AND-Glieder A1 oder A2 inaktiv ist, wodurch das ausgangsseitige AND-Glied A3 ebenfalls in den inaktiven Zustand gelangt.

Wenn umgekehrt alle der Empfangsorgane kein Licht empfangen, sind die AND-Glieder A1 und A2 inaktiv, die NAND-Glieder N1 und N2 hingegen sind aktiv. Der Schlitten 101 bewegt sich daher nach oben, wenn der Schalter S2 geschlossen ist. Diese Bewegung dauert so lange an, bis zwei sich auf demselben Niveau befindende Empfangsorgane reflektiertes Licht empfangen. Es werden dies die oberen Empfangsorgane 102U und 103U sein, da sie als erste von dem reflektierten Licht beaufschlagt werden, was beispielsweise dadurch zustande kommt, daß sie die obere Kante des an der Stapelungsstelle P2 gebildeten Stapels passieren, oder dadurch, daß sie auf ein oberes Begrenzungsorgan stoßen. Im letztgenannten Fall kann der Schlitten wieder dazu veranlaßt werden, eine Ausgangsstellung zu suchen.

Wegen der Verwendung der NAND-Glieder N1 und N2 zum Steuern der Aufwärtsbewegung wird, wenn lediglich eines der oberen Empfangsorgane 102U oder 103U Licht empfängt, die Aufwärtsbewegung fortgesetzt, bis beide Empfangsorgane reflektiertes Licht aufnehmen. Hierdurch wird eine Inbetriebnahme der Transportplatte so lange verhindert, bis sie sich in einer Stellung befindet, in der eine Trennung von der vorher abgelegten Lage stattgefunden hat, und zwar unabhängig davon, ob diese schief liegt oder auf andere Weise nicht ordnungsgemäß ausgerichtet ist.

Zur Erzielung einer exakten Geschwindigkeitssteuerung der Transportplatte 110 wird vorzugsweise ein Gleichstrommotor eingesetzt. Bei dem die Aufwärts- und Abwärtsbewegung bewirkenden Motor (d.h. dem Motor 149 gemäß Fig. 2C) handelt es sich vorzugsweise um einen Gleichstrommotor mit konischen Bremsen. Wenn dieser an Betriebsspannung gelegt wird, schwenkt er zur Seite aus, beim Abschalten gleitet er in seine gebremste Ausgangsstellung. Ein ähnliches Ergebnis könnte mit einem entsprechenden Kupplungs- und Bremssystem erreicht werden. Der Abstreifer 150 wird vorzugsweise durch die zwei Fluid-gesteuerten Zylinder 157 und 158 betätigt, bei denen das Fluid beispielsweise Luft ist. Es können jedoch auch andere Fluidmittel, wie z.B. Öl, verwendet werden, auch ist es möglich, den Gleichstrommotor durch einen gleichwertigen Antrieb zu ersetzen.

Es sei darauf hingewiesen, daß die Empfangsorgane 103U und 103L vorzugsweise so befestigt sind, daß sie von der Doppelreihe 172 von Reflektoren 171 diagonal reflektierte Lichtstrahlen aufnehmen. Hierdurch ist eine ordnungsgemäße Arbeitsweise auch dann gewährleistet, wenn die auf der Transportplatte befindliche Lage eines Stapels einen Spalt zwischen einzelnen ihrer Bestandteile aufweist, durch den das Licht ungehindert hindurchtreten und damit bewirken könnte könnte, daß die Transportplatte sich ein falsches Niveau sucht. Wegen der Diagonalanordnung der Empfangsorgane 103U und 103L werden Doppelreflektoren in jeder Höhe der Doppelreihe 172 benötigt, damit unabhängig von der Einstellung des Anschlagstückes 170 eine ordnungsgemäße Arbeitsweise sichergestellt ist. Damit sind die äußeren Reflektoren der Doppelreihe 172 dann aktiv, wenn das Anschlagstück vom Schlitten beabstandet eingestellt ist, die inneren Reflektoren hingegen sind dann aktiv, wenn das Anschlagstück in Richtung zum Schlitten hin eingestellt ist.

**Patentansprüche**

1. Stapeleinrichtung (100) mit einer Transportplatte (110) zum Fördern des an einer ersten Stelle aufgenommenen und in einer Lage (B') angeordneten Stückgutes, ferner mit Mitteln (140, 144) zum selbsttätigen Ausrichten der Transportplatte (110) in einer vorbestimmten Höhenlage und mit Mitteln (101) zum Bewegen der Transportplatte (110) über eine zweite Stelle (P2) und zum dort erfolgenden Ablegen der erwähnten Lage (B') als Bestandteil eines aus mehreren Lagen gebildeten Stapels, wobei Lichtsteuereinheiten (102L, 102U, 103L, 103U) zum selbsttätigen Ausrichten der Transportplatte (110) in bezug auf die jeweils in der zweiten Stelle (P2) einzunehmende Stapelhöhe in Abhängigkeit von dem an der zweiten Stelle (P2) gegebenenfalls bereits vorhandenen Stapel vorgesehen sind, dadurch gekennzeichnet, daß die Lichtsteuereinheiten (102U, 102L, 103U, 103L) jeweils Paare von übereinander angeordneten, als Lichtquelle und Empfangselement ausgebildeten Lichtsteuereinheiten bilden und zwei Paare (102U, 102L; 103U, 103L) nebeneinander derart angeordnet sind, daß im Zusammenwirken mit Reflektoren (171) die Stapelhöhe an der zweiten Stelle (P2) entweder beide Paare (102U, 102L bzw. 103U, 103L) abdeckt bzw. freigibt oder nur das untere Paar (102L bzw. 103L) abdeckt, so daß bei Abdeckung bzw. Freigabe die Transportplatte (110) entsprechend vertikal verschoben und bei Abdeckung nur des unteren Paares (102L bzw. 103L) in ihrer Höhenlage festgehalten wird.

2. Stapeleinrichtung nach Anspruch 1, dadurch gekennzeichnet, daß die erste Stelle und die zweite Stelle (P2) sich in derselben Arbeitshöhe befinden.

3. Stapeleinrichtung nach Anspruch 1 oder 2, dadurch gekennzeichnet, daß der Transportplatte (110) ein Abstreifer (150) zugeordnet ist, der quer zu der Transportplatte (110) bewegbar ist.

4. Stapeleinrichtung nach Anspruch 3, dadurch gekennzeichnet, daß der Abstreifer (150) aus einer inneren und äußeren Planke (151; 152—1, 152—2) besteht, die die Transportplatte (110) kreuzen.

5. Stapeleinrichtung nach Anspruch 4, dadurch gekennzeichnet, daß der Abstreifer (150) in der Bewegungsrichtung der Transportplatte (110) bewegbar ist.

**Revendications**

1. Dispositif de gerbage (100) composé d'une table (110) de transport d'objets chargés à une première position et disposés pour former une couche (B'), de moyen (140), (144) pour le réglage automatique de la table de transport à une hauteur predétèrminée, et, de moyen (101) pour conduire la table de transport (110) a une seconde position (P2) et pour y déposer les objects disposé en une couche (B') constituant un des elements d'un émpilement à plusièures couches, par le quel des éléments lumineux de guidage (102L), (102U), (103L), (103U) sont présent pour le réglage automatique de la hauteur de la table de transport (110), correspondant a la seconde position (P2), en fonction de l'emplacement déjà éxistant à cette seconde position (P2), caracterisé par arrangement des éléments lumineux (102U), (102L), (103U), (103L) ensemble pour transmission et réception de lumière avec deux paires arrangé à côté en operation avec réflecteurs (171) pour arranger la couche sur la seconde position par operation en couvrir ou découvrir les elements lumineux (102U), (102L) ou (103U), (103L), ou seulement l'autre paire (102L) ou (103L) par l'action de table de transport (110) en mouvement vertical en couvrir et découvrir des elements et par découvrir seulement l'autre paire (102L) ou (103L).

2. Dispositif de gerbage selon la revendication 1 caractérisé en ce que la première et la seconde position (P2) se trouvent à la même hauteur de travail.

3. Dispositif de gerbage selon l'une des revendication 1 et 2 caractérisé en ce que la table de transport coopère avec un dispositif racleur (150) déplaçable orthogonalement à la table de transport.

4. Dispositif de gerbage selon la revendication 3 caractérisé en ce que le dispositif racleur (150) se compose d'une planche intérieure (151) et d'une planche extérieure (152—1), (152—2) qui sont orthogonales et sécantes à la tables de transport.

5. Dispositif de gerbage selon la revendication 4 caractérisé en ce que le dispositif racleur (150) est mobile dans le sens du mouvement de la table de transport.

## Claims

1. Stacking arrangement (100) with a transport platen (110) for conveying parcels arranged in a tier (B') at a first location, means (140, 144) for automatically aligning the transport platen (110) at a predetermined height, means (101) for moving the transport platen (110) to a second location (P2) where the tier is deposited as a component of the stack formed in several tiers, whereby there are photocells (102L, 102U, 103L, 103U) for automatically aligning the transport platen (110) with respect to the given stack height at the second location (P2) and handling the stack at the second location (P2), characterized in that, the photocells (102U, 102L, 103U, 103L) are paired with one another, forming two transmitting and receiving pairs (102U, 102L; 103U, 103L), arranged side-by-side, so that together with reflectors (171) the given stack height at the second location (P2) either covers or uncovers both pairs (102U, 102L or 103U, 103L) or covers only the other pairs (102L or 103L), such that with covering or uncovering of the light path the transport platen (110) is vertically positioned and by covering only the other pairs (102L or 103L) it is fixed in height.

2. Stacking apparatus in accordance with claim 1, characterized in that, the first working location and the second location (P2) are at the same working level.

3. Stacking apparatus in accordance with claim 1 or 2, characterized in that, the transport platen (110) has a stripper (150) which is transversely disposed with respect to the transport platen (110).

4. Stacking apparatus in accordance with claim 3, characterized in that, the stripper (150) has inner and outer plates (151; 152—1, 152—2) transverse to the transport platen (110).

5. Stacking apparatus in accordance with claim 4, characterized in that, the stripper (150) is movable in the direction of the transport platen (110).

FIG. 1

FIG. 2A

FIG. 2B

FIG. 2C